# EUROPÄISCHE PATENTSCHRIFT

(11) **EP 0 445 609 B1**
(45) Veröffentlichungstag und Bekanntmachung des Hinweises auf die Patenterteilung: **08.05.1996**
(21) Anmeldenummer: 91102672.2
(22) Anmeldetag: 23.02.1991
(51) Int. Cl.: C08G 6/02, D06P 1/00

(54) **Mischkondensationsprodukte**
Mixed condensation products
Produits de condensation mixte

(30) Priorität: 09.03.1990 DE 4007484; 12.07.1990 DE 4022220
(43) Veröffentlichungstag der Anmeldung: 11.09.1991
(73) Patentinhaber: BAYER AG, D-51368 Leverkusen (DE)
(72) Erfinder: Maurer, Werner, Dr., W-5090 Leverkusen 3 (DE); Boehmke, Günther, Dr., W-5090 Leverkusen 1 (DE); Schmitz, Gerd, W-5090 Leverkusen 1 (DE); Jakobs, Karlhans, Dipl.-Ing., W-5060 Bergisch Gladbach 2 (DE)

(56) Entgegenhaltungen:
- DE-A- 1 668 051
- DE-C- 870 031
- FR-A- 2 324 661

## Beschreibung

Die vorliegende Erfindung betrifft Kondensationsprodukte aus Ketonen der Formel (I), 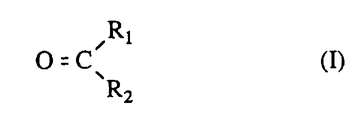 in welcher
- R₁ und R₂: gleich oder verschieden sind und jeweils für einen gegebenenfalls substituierten aliphatischen Rest, der durch Heteroatome und -gruppierungen wie -O- oder -NH- unterbrochen sein kann, stehen,
oder
- R₁ und R₂: gemeinsam mit dem Kohlenstoffatom, an welches sie gebunden sind, für einen gegebenenfalls substituierten cycloaliphatischen Rest, oder einen gegebenenfalls substituierten gesättigten Carbocyclus stehen,
Ketonen der Formel (II), 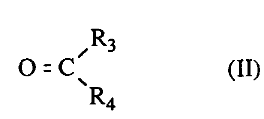 in welcher
- R₃: für einen gegebenenfalls substituierten, aliphatischen Rest, der durch Heteroatome und -gruppierungen wie -O- oder -NH- unterbrochen sein kann, steht und
- R₄: für einen gegebenenfalls substituierten, aromatischen Rest steht,
Formaldehyd und einem Salz der schwefligen Säure.

In bevorzugter Form bedeuten R¹, R und R³, die gleich oder verschieden sind, gegebenenfalls substituiertes C₁-C₄-Alkyl, das durch Heteroatome und Gruppierungen, wie -O- oder -NH- unterbrochen sein kann. Als bevorzugter cycloaliphatischer Rest kommt ein 3- bis 7-gliedriger in Frage.

In bevorzugter Form bedeutet R⁴ gegebenenfalls substituiertes Phenyl.

Geeignete Substituenten für Alkyl in der Definition von R₁, R₂ und R₃ sowie für den gesättigten Carbocyclus in der Definition von R₁ und R₂ sind beispielsweise Halogenatome wie Fluor, Chlor oder Brom, C₁-C₄-Alkyl-, Hydroxy-, C₁-C₄-Alkoxy- oder Carboxy- oder Sulfogruppen, sowie die Alkali- und/oder Ammoniumsalze der beiden letztgenannten, wobei das Ammoniumion 1- bis 3-fach durch z.B. Methyl- oder Hydroxyethylgruppen substituiert sein kann.

Geeignete Substituenten für Phenyl in der Definition von R₄ sind beispielsweise Halogenatome, C₁-C₄-Alkyl-, C₁-C₄-Alkoxy-, Hydroxy- oder Carboxy-- oder Sulfogruppen, sowie die Alkali- und/oder Ammoniumsalze der beiden letztgenannten, wobei das Ammoniumion 1- bis 3-fach durch z.B. Methyl- oder Hydroxyethylgruppen substituiert sein kann.

Bevorzugte erfindungsgemäße Kondensationsprodukte sind solche aus Mischungen der Ketone (I) und (II) im Molverhältnis 0,5-0,6:0,5-0,4 und, bezogen auf 1 Mol dieser Ketonmischung, 2-2,5 Mol Formaldehyd sowie 0,3-0,6 Mol an Salz der schwefligen Säure.

Besonders bevorzugte erfindungsgemäße Kondensationsprodukte sind solche aus Mischungen der Ketone (I) und (II) im Molverhältnis 0,5-0,6:0,5-0,4 und, bezogen auf 1 Mol dieser Ketonmischung, 2-2,2 Mol Formaldehyd sowie 0,4-0,5 Mol an Salz der schwefligen Säure.

Das Keton (I) kann in reiner Form oder als Ketonmischung eingesetzt werden.

Als besonders bevorzugt zu verwendende Ketone der Formel (I) seien genannt: Aceton, Methylethylketon, Diethylketon, Diisopropylketon, Cyclopentanon oder Cyclohexanon.

Als besonders bevorzugt zu verwendende Ketone der Formel (II) seien genannt: Acetophenon, Propiophenon, 4-Methoxyacetophenon, 4-Hydroxyacetophenon, 4-Methylacetophenon.

Besonders bevorzugte erfindungsgemäße Kondensationsprodukte werden erhalten, wenn als Keton (I) Aceton und als Keton (II) Acetophenon verwendet wird.

Formaldehyd wird vorzugsweise in 30-40 %iger Lösung oder in Form von Formaldehyd abgebenden Verbindungen, wie z.B. Paraformaldehyd oder Keton-Additions-Verbindungen (Methylolverbindungen) eingesetzt.

Als Salze der schwefligen Säure verwendet man beispielsweise Alkalibisulfite oder Ammoniumbisulfite. Vorzugsweise verwendet man Natriumbisulfit, Kaliumbisulfit, Triethanolammoniumbisulfit, Diethanolmethylammoniumbisulfit, Dimethylethanolammoniumbisulfit, Triisopropanolammoniumbisulfit, Methyldiisopropanolammoniumbisulfit oder Dimethylisopropanolammoniumbisulfit.

Die erfindungsgemäßen Kondensationsprodukte können hergestellt werden, indem man Ketone der Formel (I) und Ketone der Formel (II) mit Formaldehyd und einem Salz der schwefligen Säure bei einem pH-Wert von 9-11 und bei Temperaturen zwischen 100°C und 130°C umsetzt. Vorzugsweise arbeitet man bei Temperaturen zwischen 110°C und 120°C.

Zur Reaktionsdurchführung werden die Ausgangsverbindungen gemäß den erfindungsgemäßen Molverhältnissen gemischt. Die anfangs zweiphasige Reaktionsmischung wird mit Natrium- oder Kaliumhydroxid-Lösung auf einen pH-Wert von 9-11 eingestellt. Die Kondensation wird bei Temperaturen zwischen 100°C und 130°C, vorzugsweise bei Temperaturen zwischen 110°C und 120°C, durchgeführt. Nach 3 bis 5 Stunden ist die Reaktion beendet. Bei technischen Ansätzen kann die Durchführung in einem geschlossenen Kessel unter Stickstoffatmosphäre vorteilhaft sein.

Die erhaltene Lösung kann beispielsweise mit Ameisensäure neutralisiert werden.

Kondensationsprodukte aus Ketonen, Formaldehyd und Alkalisalzen der schwefligen Säure sind bereits bekannt. Die Verwendungsmöglichkeiten dieser Produkte hängen vom Molverhältnis der Reaktionspartner ab. Aus der DT-PS 870 031 sind Gerbstoffe bekannt, die durch Kondensation aliphatischer Ketone mit Formaldehyd und Sulfonsäuregruppen liefernden Verbindungen erhalten werden.

In der DT-OS 1 720 729 werden Kondensationsprodukte erwähnt, die durch Reaktion von Cycloalkanonen, Formaldehyd und Alkalisalzen der schwefligen Säure herstellbar sind. Nach den Beispielen dieser Offenlegungsschrift werden Verbindungen erhalten, die bis zu 0,3 Mol Sulfogruppen pro Mol Cyclohexanon enthalten und eine gute Gerbstoffwirkung haben. Sie zeigen jedoch nicht die gute Dispergierwirkung der neuen erfindungsgemäßen Produkte. Aus der DDR-PS 84 962 sind Verbindungen bekannt, die durch Kondensation von Aceton, Formaldehyd und Natriumbisulfit oder Natriumsulfit beispielsweise im Molverhältnis 1:2:1 erhalten werden. Diese Kondensationsprodukte sind leicht wasserlöslich und haben Dispergiermitteleigenschaften. Ein großer technischer Nachteil liegt jedoch in ihrer starken rotbraunen bis schwarzbraunen Eigenfärbung.

Sie sind darum ungeeignet für die Formierung von hellen Dispersionsfarbstoffen oder optischen Aufhellern, insbesondere, wenn diese auf Polyamid aufgebracht werden sollen. Das schwach aufziehende Dispergiermittel übertönt durch seine Eigenfarbe Farbstoff und Aufheller.

Weitere Kondensationsprodukte aus Cycloalkanonen, Formaldehyd und Alkalibisulfit im Molverhältnis 1 : 2 - 3 : 0,7 - 1,1, die in wäßriger Lösung hergestellt werden, sind aus FR 2.324.661 ( 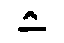 DE-OS 25 42 090) bekannt; ihre Verwendung als Dispergiermittel wird beansprucht.

Aus einem Zusatz DE-OS 1 668 051 zur DE-OS 1 720 729 sind Kondensationsprodukte bekannt, die unter Verwendung des wasserunlöslichen Acetophenons hergestellt wurden. Das Verfahren ist wegen der mangelnden Mischbarkeit der Komponenten technisch völlig unbefriedigend, da sich immer nur ein Teil in schwer kontrollierbaren Molverhältnissen umsetzt.

Das unumgesetzte Öl muß abgetrennt werden und die Wirksamkeit des wäßrigen Kondensates ist unbefriedigend. Die allgemeine Einsetzbarkeit ist nicht vorhanden, da restliches Sulfitsalz Farbstoffe reduzieren kann und Abwässer belastet.

Aus der DDR-A-84 962 und DE-A-2 657 453 sind Kondensationsverfahren bekannt, bei denen bereits zu Beginn der Kondensation pH-Werte von 10 bis 13 eingestellt werden. Bei dieser Verfahrensführung treten Nebenprodukte wie Methanol und Isophoron auf. Sie sind brennbar und nicht mehr kondensationsfähig und müssen vor der Isolierung oder Verwendung der Kondensationsprodukte beispielsweise durch Destillation entfernt werden. Wegen der Entzündungsgefahr können die wäßrigen Reaktionslösungen nicht direkt der Sprühtrocknung zugeführt werden.

Überraschenderweise zeigte sich, daß das erfindungsgemäße Verfahren zu Produkten führt, die frei von diesen störenden Nebenprodukten sind. Die Kondensationsprodukte sind hervorragende Dispergiermittel, die auf verschiedenen Gebieten verwendbar sind. Sie eignen sich insbesondere zum Dispergieren von anorganischen und organischen Pigmenten, Dispersionsfarbstoffen, schwerlöslichen anionischen Farbstoffen, z.B. Säure- oder Chromkomplexfarbstoffen, optischen Aufhellern, schwerlöslichen kationischen Farbstoffen, Kalkseifen in Waschmitteln und Pflanzenschutzmitteln.

Ebenso ist ihre Wirksamkeit zur Dispergierung von synthetischen und natürlichen Latices ausgezeichnet. Sie haben eine geringe Eigenfarbe und eine gute Lichtstabilität.

Von besonderem Vorteil ist der niedrige Fremdsalzgehalt der Dispergiermittel, wenn als Sulfitsalze die Bisulfite verwendet wurden.

Die konzentrierten Lösungen können in der vorliegenden Form gelagert werden und direkt zum Einsatz kommen, oder ohne Vorbehandlung durch Sprühtrocknung in lockere, helle Pulver überführt werden.

Werden die Aminsalze verwendet, so lassen sich die Dispergiermittel-Lösungen zu höchstkonzentrierten Lösungen eindampfen, die nicht auskristallisieren.

Die vorliegende Erfindung betrifft weiterhin Färbereihilfsmittel auf der Basis von erfindungsgemäßen Dispergiermitteln und von nichtionischen Egalisiermitteln zum Färben und Egalisieren von Wolle, Polyamid und insbesondere Polyesterfasern.

Es ist allgemein bekannt, daß nichtionische Egalisiermittel für Dispersionsfarbstoffe z.B. oxyalkylierte Ölsäure und oxyethyliertes Nonylphenol, oder die für 2:1-Chromkomplexfarbstoffe für Wolle oder Polyamidmaterialien eingesetzten hochoxyethylierten Fettalkohole, beim Färben von Polyestermaterialien oder Polyamidmaterialien, hervorragend egalisieren, jedoch dabei zum Retardieren der Farbstoffe neigen, dadurch die Farbstoffausbeute vermindern und das Abwasser belasten. Außerdem neigen diese Produkte im Färbebad zum Schäumen und sind deshalb in der Jetfärberei nicht geeignet.

Der naheliegende Gedanke, diese Egalisiermittel mit den in der Praxis gebräuchlichen anionischen Dispergiermitteln zu kombinieren, scheiterte andererseits daran, daß beide Komponenten sich in den üblichen Handelskonzentrationen nicht mischen.

Dies gilt sowohl für die bekanntesten Dispergiermittel auf Basis von Naphthalinsulfonsäure-Formaldehyd-Kondensaten, wie auch für die Cyclohexanon-Bisulfit-Formaldehyd-Kondensate (DE-OS 1 720 729) oder Aceton-Bisulfit-Formaldehyd-Kondensate (DDR-PS 84 962).

Letztere Produkte sind weitgehend frei von Fremdsalzen, wie z.B. Natriumsulfat, und trotzdem nicht mischbar. Dies trifft auch für die Naphthalinsulfonsäure-Formaldehyd-Kondensate zu, die durch geeignete Reinigungsprozesse von den begleitenden Natriumsulfaten befreit wurden, so daß man diese Nichtmischbarkeit bisher als allgemein geltend halten konnte.

Es wurde nun überraschenderweise gefunden, daß man die erfindungsgemäßen Dispergiermittel ausgezeichnet mit nichtionischen Egalisiermitteln kombinieren und die Kombination für den obengenannten Zweck einsetzen kann.

Geeignete nichtionische Egalisiermittel sind beispielsweise beschrieben in: "Nonionic Surfactants", 1967, Marcel/Dekker Inc., New York. Besonders bevorzugt sind die Ethylenoxid- bzw. Ethylenoxid/Propylenoxid-Addukte von gesättigten und ungesättigten, überwiegend geradkettigen Fettalkoholen, Fettsäuren, Fettamiden, wobei die C-Kettenlängen bei C₁₀-C₁₈ und die Ethylenoxid- bzw. Propylenoxideinheiten pro Mol bei 3-20 Mol liegen.
Außerdem eignen sich Umsetzungsprodukte von natürlichen Fetten und Ölen, z.B. Sojaöl, Rapsöl, Kokosfett, Rindertalg, Rizinusöl, mit Ethylenoxid oder Gemischen aus Ethylenoxid und Propylenoxid.

Die bei der Herstellung anfallenden konzentrierten Lösungen der Dispergiermittel können in der vorliegenden Form direkt zum Einsatz kommen, indem man sie mit Lösungen des Egalisiermittels bzw. mit dem Egalisiermittel selbst vereinigt.

Die Lösungen des Dispergiermittels können aber auch z.B. durch Sprühtrocknung zu Pulvern verarbeitet und mit dem Egalisiermittel in geeigneter Form abgemischt werden.

Die erfindungsgemäßen Mischungen können insbesondere für die Polyesterfärberei mit Carrierwirkstoffen, wie beispielsweise aromatische Carbonsäuren und deren Ester, N-Alkylphthalimiden (wie sie in der DE-OS 18 04 527 beschrieben worden sind) zum Einsatz kommen.

Bevorzugt für die Jetfärberei im HT-Färbeverfahren können noch zur Beseitigung von Schaumproblemen Entschäumer zugesetzt werden, wobei sich insbesondere Polypropylen-ethylen-glykolether oder emulgierbare Entschäumer auf Mineralöl-bzw. Naturölbasis eignen.

Die neuen Hilfsmittel zeichnen sich durch eine geringe Eigenfärbung und gute Lichtstabilität aus.

Besonders hervorzuheben ist die leichte Handhabbarkeit dieser Produkte, da sie nur in einer Handelsform vorliegen und die Komponenten vom Färber nicht erst vor Ort in geeigneter Weise abgemischt werden müssen.

Die Herstellung und Verwendbarkeit der erfindungsgemäßen Dispergiermittel und der erfindungsgemäßen Färbereihilfsmittel soll anhand der folgenden Beispiele erläutert werden.

### Beispiele

### Beispiel 1

104 g (0,4 Mol) Natriumbisulfit-Lösung (40 %ig), 220 g (2,2 Mol) Formaldehyd (30 %ige Lösung) und 35 g (0,6 Mol) Aceton sowie 48 g (0,4 Mol) Acetophenon wurden bei Raumtemperatur miteinander verrührt. Die Temperatur stieg nicht über 50°C an. Nach ca. 15 Minuten wurde der pH-Wert kontrolliert (etwa 7,0-7,5) und mit Natronlauge auf pH-Wert 12 gestellt. Hierzu sind je nach Beschaffenheit der Bisulfitlösung und pH-Wert der Formaldehydlösung ca. 9 g konzentrierte Natronlauge (45 %ig) notwendig. Dann wurde langsam auf 70-80°C erwärmt, wobei eine Wärmetönung die einsetzende Kondensation anzeigte. Schon nach 10-15 Minuten war die Lösung homogen. Man ließ unter Rückflußkühlung 4 Stunden lang bei 103-105°C reagieren. Während der Abkühlung neutralisierte man mit Ameisensäure auf pH 7.

Die erhaltene bräunliche Lösung hatte einen Gehalt von 36 % an Dispergiermittel. Die Lösung war lagerbeständig und schied keine Salze aus. Sie konnte direkt zu einem nicht hygroskopischen Pulver sprühgetrocknet werden.

Die Dispergierwirkung war ausgezeichnet, sowohl für anorganische wie organische Pigmente.

Die Eigenschaft, die Thixotropie von Farbstoff-Pigmentpreßkuchen mit geringen Mengen von 0,05 bis etwa 0,3 Prozent zu durchbrechen, ist bei diesem Produkt besonders ausgeprägt, so daß es sich besonders bei der Perlmühlenmahlung bewährt.

3 kg eines Pulvers des Farbstoffs C.I. Dispersblue 71 wurden mit 10 kg einer 30 %igen Lösung des erfindungsgemäßen Dispergiermittels homogen verrührt, mittels einer Rotor-Stator-Zahnkolloidmühle vorzerkleinert und in einer schnellaufenden Rührwerksmühle, die mit Glas-Mahlkörpern der Körnung 0,4-0,6 mm gefüllt war, mit einer Verweilzeit von 50 Minuten zerkleinert. Die erhaltene Suspension zeigte gute Lagerstabilität und anwendungstechnische Eigenschaften.

Ähnlich gut lassen sich folgende Stoffe dispergieren:
C.I. Dispersyellow 60, C.I. Vatbrown 3, Kupferphthalocyanin der Modifikation nach Beispiel 1 der DT-PS 1 136 303, der Dispersionsaufheller nach Beispiel 1 der DT-PS 1 080 963 oder Titandioxid (Rutil).

10 kg eines 18 %igen Filterkuchens des Farbstoffs C.I. Dispersionsblue 71 wurden unter Zusatz von 1,8 kg des erfindungsgemäßen Dispergiermittels mit dem Schnellrührer verflüssigt und anschließend in einer schnellaufenden Rührwerksmühle, die Ottawa-Sand (Körnung 0,5 - 0,8 mm) enthielt, mit einer Verweilzeit von 40 Minuten naßgemahlen. Nach weiterem Zusatz von 8 kg einer 30 %igen Lösung des erfindungsgemäßen Dispergiermittels und anschließender Sprühtrocknung bei Lufteintrittstemperatur von 180°C und Luftaustrittstemperatur von 80°C wurde eine in Wasser leicht dispergierbare Einstellung erhalten, die gute anwendungstechnische Eigenschaften zeigte.

Ähnlich gut lassen sich folgende Stoffe dispergieren:
C.I. Dispersyellow 60, C.I. Vatbrown 3, Kupferphthalocyanin der Modifikation nach Beispiel 1 der DT-PS 1 136 303, der Dispersionsaufheller nach Beispiel 1 der DT-PS 1 080 963 oder Titandioxid (Rutil).

### Beispiel 2

220 g (2,2 Mol) Formaldehyd (30 %ig), 104 g (0,4 Mol) Natriumbisulfit-Lösung (40 %ig) sowie 23 g (0,4 Mol) Aceton, 29 g (0,3 Mol) Cyclohexanon und 36 g (0,3 Mol) Acetophenon wurden bei Raumtemperatur miteinander verrührt. Nach ca. 15 Minuten Rühren wurde der pH-Wert gemessen und mit Natronlauge auf pH 12 eingestellt. Der Verbrauch lag bei etwa 10 g Natronlauge (45 %ig).

Die Temperatur stieg an und wurde durch zusätzliches langsames Anheizen auf 90°C gesteigert. Weiterer Temperaturanstieg führte zu Rückfluß bei 103-105°C und bei geschlossenem Druckgefäß zum Temperaturanstieg auf etwa 115°C. Man hielt die Reaktionsmischung 3 Stunden bei dieser Endtemperatur. Die Reaktionslösung wurde schon in den ersten 30 Minuten homogen und blieb auch bis zum Ende der Reaktion klar, ohne Kondensationsharze abzuscheiden.

Das Dispergiermittel eignet sich hervorragend zur Dispergierung von Feststoffen wie Zinkoxid oder feinstgemahlener Farbstoffe.

### Beispiel 3

Es wurden 220 g (2,2 Mol) Formaldehyd (30 %ig), 104 g (0,4 Mol) Natriumbisulfit-Lösung (40 %ig) sowie 21 g (0,36 Mol) Aceton, 23,5 g (0,24 Mol) Cyclohexanon und 48 g (0,4 Mol) Acetophenon verwendet. Die Reaktionsdurchführung erfolgte analog zu den Beispielen 1 und 2. Es wurde ein Dispergiermittel erhalten, das sich besonders für polare Pflanzenschutzwirkstoffe hervorragend eignet.

Das Herbizid "Diuron"® wurde in einer Mahlvorrichtung, z.B. einer Strahlmühle, in folgender Formulierung vermahlen: 80 % Wirkstoff, 5 % Dispergiermittel, 1,25 % Dibutylnaphthalinsulfonat, 4 % "Silikasil S"®, 9,5 % Tonerde. Die Prüfung der Dispergierbarkeit nach der WHO-Vorschrift wurde erfüllt. In einer 1 %igen Dispersion in Wasser 25° d. Härte setzten sich nach 30 Minuten weniger als 14 % des Wirkstoffes ab.

### Beispiel 4

Es wurden 220 g (2,2 Mol) Formaldehyd (30 %ig), 104 g (0,4 Mol) Natriumbisulfit-Lösung (40 %ig) sowie 59 g (0,6 Mol) Cyclohexanon und 48 g (0,4 Mol) Acetophenon verwendet. Die Reaktionsdurchführung erfolgte analog zu den Beispielen 1 und 2. Man erhielt eine dickflüssige Dispergiermittellösung, deren Wirksamkeit auf Zinkoxid nachgelassen hatte, jedoch bei organischen Wirkstoffen hervorragend war.

Das Insekticid "Lebaycid"® wurde in folgender Formulierung vermahlen: 40 % Wirkstoff, 4 % Dispergiermittel, 0,5 % Dibutylnaphthalinsulfonat, 55,5 % "Silkasil"®. Bei der WHO-Prüfung auf Dispergierbarkeit in Wasser (20° d. Härte) zeigte sich nach 30 Minuten weniger als 17 % des Wirkstoffes als Bodensatz.

### Beispiel 5

Es wurden 220 g (2,2 Mol) Formaldehyd (30 %ig), 104 g (0,4 Mol) Natriumbisulfit-Lösung (40 %ig) sowie 29 g (0,5 Mol) Aceton und 60 g (0,5 Mol) Acetophenon verwendet. Die Reaktionsdurchführung erfolgte analog zu Beispiel 1.

Die erhaltene Dispergiermittel-Lösung war dickflüssig, aber in jedem Verhältnis mit Wasser mischbar.

### Beispiel 6

104 g (0,4 Mol) Natriumbisulfit-Lösung (40 %ig), 220 g (2,2 Mol) Formaldehyd (30 %ig), 29 g (0,5 Mol) Aceton, 48 g Acetophenon (0,4 Mol) und 15 g (0,1 Mol) 4-Methoxyacetophenon wurden bei Raumtemperatur miteinander verrührt. Die Temperatur der Mischung stieg auf 30 40°C an. Nach ca 15 Minuten wurde der pH-Wert kontrolliert (etwa 7,0-7,5) und mit Natronlauge auf pH-Wert 12 gestellt. Dabei stieg die Temperatur auf 70-100°C an. Man ließ unter Rückfluß 4 Stunden bei 100-105°C nachreagieren. Nach Neutralisation mit Ameisensäure erhielt man eine klare, rotbraune Flüssigkeit, mit einem Gehalt von ca. 40 % Feststoff. Das Produkt stellt ein geeignetes Mittel zum Dispergieren von Wirkstoffen für den Pflanzenschutz dar.

### Beispiel 7

Eine Lösung von 81 g (0,4 Mol) Methyldiethanolammonium-hydrogensulfit in 7 ml Wasser wurde mit 220 g (2,2 Mol) Formaldehyd-Lösung (30 %ig), 35 g (0,6 Mol) Aceton und 48 g (0,4 Mol) Acetophenon vermischt. Die Temperatur stieg auf 43°C an. Der sich einstellende pH-Wert von pH 7 wurde mit ca. 10 g konz. Natronlauge auf pH 10,5 eingestellt, und die Reaktionslösung im Druckgefäß 4 Stunden auf 110-115°C erhitzt. Die 43 %ige Dispergiermittellösung war sehr hell bräunlich gefärbt. Beim Eindampfen resultierte ein nicht kristallisierendes, zähfließendes Produkt mit sehr gutem Dispergierverhalten.

### Beispiel 8

12 g (0,1 mol) Levulinsäure und 50 g Wasser wurden mit 10 g NaOH (45 %ig) auf pH 7-8 gestellt. Nach Zugabe von 104 g (0,4 mol) Natriumbisulfitlösung (40 %ig), 220 g (2,2 mol) Formaldehyd (30 %ig), 23 g (0,4 mol) Aceton und 60 g (0,5 mol) Acetophenon erfolgte die Reaktionsführung analog zu den Beispielen 1 und 2. Das so erhaltene Produkt zeigt hervorragende Eigenschaften beim Dispergieren von Farbstoffen und den Herbiziden Diuron® und Sencor®.

### Beispiel 9

Es wurden 220 g (2,2 mol) Formaldehyd (30 %ig), 78 g (0,3 mol) Natriumbisulfitlösung (40 %ig) sowie 34 g (0,3 mol) 2,5-Hexandion und 48 g (0,4 mol) Acetophenon verwendet. Die Reaktionsführung erfolgte analog zu den Beispielen 1 und 2. Das Produkt stellt ein geeignetes Mittel zum Dispergieren von Wirkstoffen für den Pflanzenschutz und von Farbstoffen dar.

### Beispiel 10

Es wurden 220 g (2,2 mol) Formaldehyd (30%ig), 104 g (0,4 mol) Natriumbisulfitlösung (40 %ig) sowie 17,5 g (0,3 mol) Aceton, 17 g (0,15 mol) 2,5-Hexandion und 48 g (0,4 mol) Acetophenon verwendet. Die Reaktionsführung erfolgte gemäß Beispiel 1. Es wurde ein Dispergiermittel mit hoher Wirksamkeit für Pflanzenschutzwirkstoffe und für anorganische und organische Pigmente erhalten.

### Beispiel 11

Es wurden 220 g (2,2 mol) Formaldehyd (30 %ig), 104 g (0,4 mol) Natriumbisulfitlösung (40 %ig) sowie 35 g (0,6 mol) Aceton, 24 g (0,2 mol) Acetophenon und 28 g (0,2 mol) 4-Hydroxy-acetophenon verwendet. Die Reaktionsführung erfolgte analog zu den Beispielen 1 und 2. Das entstandene Produkt zeigt sehr gute Dispergiereigenschaften bei Pflanzenschutzwirkstoffen.

### Beispiel 12

Es wurden 130 g (0,5 Mol) Natriumbisulfit-Lösung (40 %ig), 220 g (2,2 Mol) Formaldehyd (30 %ige Lösung) sowie 35 g (0,6 Mol) Aceton und 48 g (0,4 Mol) Acetophenon verwendet Die Reaktionsdurchführung erfolgte analog zu Beispiel 1.

Man erhielt ein Dispergiermittel mit hoher Wirksamkeit

Zur Messung der Dispergierwirkung wurde folgende Methode angewandt:
- 10g: Zinkoxidpulver (für Analyse, Riedel-de Häen, Seelze-Hannover)
- 9,7 g: Wasser und
- 0,3 g: Dispergiermittel wurden miteinander bis zur Auflösung des Dispergiermittels verrührt (keine zusätzliche Mahlung).

- 1. Prüfung:: diese Mischung mußte dünnflüssig sein.
- 2. Prüfung:: diese dünnflüssige Dispersion wurde in einem 250 ml Meßzylinder, der 190 ml Wasser enthielt, eingegossen und zum Vermischen 10 mal umgeschüttelt.
Nach 3 Stunden Stehen wurden die Zinkoxidkonzentrationen bei einer Meßzylinderhöhe von 50 ml und 150 ml bestimmt. Dies geschah durch die Entnahme von jeweils 5 ml bei diesen Marken. Der Gehalt an noch vorhandenem Zinkoxid wurde gravimetrisch oder titrimetrisch bestimmt.
Die Angaben erfolgen in Prozent vom theoretisch möglichen Gehalt.

Die Zahlen waren bei:

| | 150 ml Höhe | 50 ml Höhe |
|---|---|---|
| Bsp.12 (0,5 Mol Na-Bisulfit) | 88 % | 96 % |

### Beispiel 13

Man arbeitete wie in Beispiel 1, verwendete jedoch Ammoniumbisulfit. Dabei wurde eine konzentrierte, lagerstabile Lösung erhalten.

### Beispiel 14

30 Teile des Oxyethylierungsproduktes von 1 Mol Rizinusöl mit 20 Mol Ethylenoxid, 65 Teile der Lösung des Dispergiermittels aus Aceton, Acetophenon, Formaldehyd und Natriumbisulfit (wie in Beispiel 1 beschrieben) und 5 Teile Wasser wurden bei Raumtemperatur homogen verrührt. Diese stabile, leicht viskose Lösung eignet sich hervorragend als Egalisiermittel und Dispergiermittel beim Färben von Polyester und Polyamidmaterialien mit feinverteilten Dispersionsfarbstoffen (siehe Colour Index, Vol. 2, P.2483-2741.3. Edition [1971]).

### Beispiel 15

20 Teile Ölsäure, umgesetzt mit 6 Mol Ethylenoxid, 10 Teile Rizinusöl mit 30 Mol Ethylenoxid und 67 Teile der Lösung des Dispergiermittels nach Beispiel 1 und 3 Teile eines emulgierbaren Entschäumers aus Mineralöl, werden bei Raumtemperatur homogen verrührt.

Die klare, stabile Lösung eignet sich gleichfalls als Egalisier- und Dispergiermittel und führt auch bei hohen Flottengeschwindigkeiten in der Färbereiapparatur zu keinerlei Schaumproblemen.

### Beispiel 16

20 Teile Ölsäure mit 6 Mol Ethylenoxid, 10 Teile Oleylalkohol mit 20 Mol Ethylenoxid, 68 Teile der Lösung des Dispergiermittels nach Beispiel 1 und 2 Teile Isopropanol wurden bei Raumtemperatur homogen verrührt. Diese klare Lösung ist stabil, lagerfähig und eignet sich hervorragend als Egalisier- und Dispergiermittel.

### Beispiel 17

Eine Wirkware aus einer texturierten Polyesterfaser wurde nach folgender Rezeptur gefärbt:

| | | |
|---|---|---|
| 2.0 % | Disperse Orange 13 | vom Warengewicht |
| 0.3 % | Disperse Red 82 | vom Warengewicht |
| 0.15 % | Disperse Blue 56 | vom Warengewicht |
| 2 g/l | der Mischung nach Beispiel 11 | |

Start bei 70°C, in 90 Min. bis 130°C, 60 Min. bei 130°C, anschließend spülen und alkalisch-reduktiv nachbehandeln.

Die Wirkware zeigte eine hervorragende Egalität, ohne daß sich apparativ bedingte Unterschiede in der Farbtiefe und in der Nuance des Beigetons abzeichnen, obwohl kein zusätzliches Dispergiermittel eingesetzt wurde.

Zum Nachweis des Egalisiervermögens wurde folgender Versuch ausgeführt:

Gleiche Gewichtsteile einer derart gefärbten Ware in den Innenlagen eines Wickelkörpers und ungefärbte Ware in den Außenlagen wurden auf einem Laborfärbeapparat mit 1 g/l einer Mischung nach Beispiel 15 bei pH 4,5-5,5 60 Min. bei 130°C behandelt. Man erhielt einen weitestgehenden Farbtiefenausgleich zwischen der vorher gefärbten und ungefärbten Ware. An diesem Test war die hervorragende Egalisierwirkung der beschriebenen Hilfsmittel-Mischung zu erkennen.

### Beispiel 18

Mit Beispiel 17 vergleichbare Ergebnisse erhielt man mit der folgenden Mischung: 20 Teile Ölsäure mit 6 Mol Ethylenoxid, 10 Teile Phthalimid mit 6 Mol Ethylenoxid, 68 Teile der Dispergiermittel-Lösung nach Beispiel 1 und 2 Teile Entschäumer auf Basis eines emulgierbar eingestellten Rapsöles.

### Beispiel 19

Man verfuhr wie in Beispiel 17, verwendete aber die folgende Mischung: 33 Teile Ölsäure mit 6 Mol Ethylenoxid, 64 Teile der Dispergiermittel-Lösung nach Beispiel 5 und 3 Teile Entschäumer auf Basis eines emulgierbar eingestellten Rapsöles.

### Beispiel 20

Kreuzspulen mit einem texturierten Polyester-Filamentgarn wurden im Flottenverhältnis von 1 : 1 0 in ein auf 70°C erwärmtes Bad eingebracht, das im Liter 0,25 g eines Farbstoffs der Formel 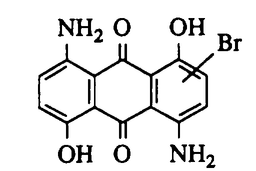 und 1 g im Liter eines Hilfsmittels der Zusammensetzung:
45 Teile N-Alkylphthalimide der Mischung nach DE-OS 1804 527
30 Teile der Dispergiermittel-Lösung nach Beispiel 5
7 Teile Ölsäureamid mit 7 Mol Ethylenoxid
7 Teile Rizinusöl mit 30 Mol Ethylenoxid
7 Teile Oleylalkohol mit 6 Mol Ethylenoxid
1 Teil Oleylalkohol mit 20 Mol Ethylenoxid
3 Teile Entschäumer
enthielt. Der sonst allgemein übliche Zusatz eines Dispergiermittels vom Typ eines Kondensationsproduktes aus Naphthalinsulfonat und Formaldehyd entfiel. Der pH-Wert des Färbebades wurde mit 2 g/l Natriumdihydrogenphosphat und Essigsäure auf 4,5-5 eingestellt. Das Bad wurde dann in 90 Minuten auf 130°C erhitzt und 30 Minuten bei dieser Temperatur gehalten. Man erhielt gleichmäßig gefärbte blaue Kreuzspulen.
Anstelle der beschriebenen Dispergiermittel-Lösung nach Beispiel 5 können auch die in den Beispielen 2 und 3 beschriebenen Dispergiermittel mit gleich gutem Erfolg eingesetzt werden.

### Beispiel 21

Eine Stückware, die in Kette und Schuß aus Polyester-Stapelfasergarn bestand, wurde auf einer Jet-Färbeanlage im Flottenverhältnis von 1:20 in ein auf 60°C erwärmtes Bad gegeben, das im Liter neben 0,2 g eines Farbstoffes der Formel 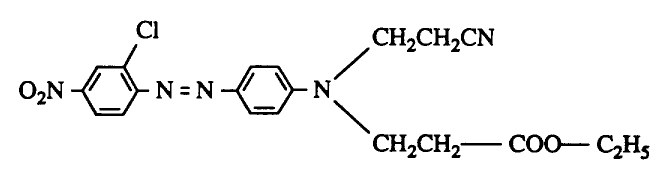 noch 1 g folgender Egalisier- und Dispergiermittelmischung enthielt:
34 Teile N-Alkylphthalimide
42 Teile der Dispergiermittel-Lösung nach Beispiel 2, 3 oder 5
14 Teile Rizinusöl mit 30 Mol Ethylenoxid
7 Teile Ölsäureamid mit 7 Mol Ethylenoxid und
3 Teile Entschäumer auf Basis eines emulgierbar eingestellten Mineralöls.

Der pH-Wert des Bades wurde mit 2 g im Liter Natriumdihydrogenphosphat und Essigsäure auf 4,5-5 eingestellt. Die Färbeflotte wurde dann in 90 Minuten auf 130°C erhitzt und 30 Minuten bei dieser Temperatur gehalten. Nach Abkühlen und Spülen erhielt man eine gleichmäßige, in einem vollen Rotton gefärbte Stückware.

### Beispiel 22

Kreuzspulen mit einem texturierten Polyester-Filamentgarn wurden im Flottenverhältnis von 1:10 in ein auf 70°C erwärmtes Bad eingebracht, das im Liter 0,25 g eines Farbstoffs der Formel 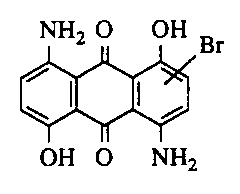 und 2 g im Liter eines Hilfsmittels der Zusammensetzung aus Beispiel 15 enthielt.

Der sonst allgemein übliche Zusatz eines Dispergiermittels z.B. vom Typ eines Kondensationsproduktes aus Naphthalinsulfonat und Formaldehyd entfiel. Der pH-Wert des Färbebades wurde mit 2 g/l Natriumdihydrogenphosphat und Essigsäure auf 4,5-5 eingestellt. Das Bad wurde dann in 90 Minuten auf 130°C erhitzt und 30 Minuten bei dieser Temperatur gehalten. Man erhielt gleichmäßig gefärbte blaue Kreuzspulen.

Anstelle der beschriebenen Hilfsmittel-Mischung kann auch die im Beispiel 15 genannte Hilfsmittel-Mischung als Egalisier-/Dispergiermittel mit gleich gutem Erfolg eingesetzt werden.

### Beispiel 23

Eine Stückware, die in Kette und Schuß aus einem Polyester-Stapelfasergarn bestand, wurde auf einer Jet-Färbeanlage im Flottenverhältnis von 1:20 in ein auf 60°C erwärmtes Bad gegeben, das im Liter neben 0,2 g eines Farbstoffs der Formel 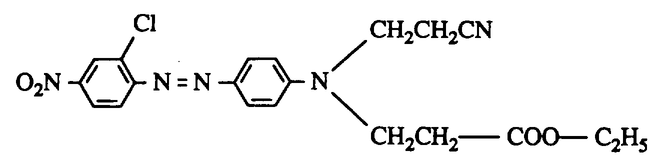 noch 2 g einer der in den Beispielen 14, 15 und 16 beschriebenen Hilfsmittel-Mischungen als Egalisier-/Dispergiermittel enthielt. Der pH-Wert des Bades wurde mit 2 g/l Natriumdihydrogenphosphat und Essigsäure auf 4,5-5 eingestellt Die Färbeflotte wurde in 90 Minuten auf 130°C erhitzt und 30 Minuten bei dieser Temperatur gehalten Obwohl die Farbflotte kein separates Schaumdämpfungsmittel enthielt, war während des Färbens keinerlei Schaumbildung feststellbar. Nach Abkühlen und Spülen erhielt man eine gleichmäßige, in einem Rotton gefärbte Stückware.

### Beispiel 24

| | |
|---|---|
| 48 Teile | N-Alkylphthalimide |
| 14 Teile | Dispergiermittel (getrocknetes Pulver) nach Beispiel 5 |
| 7 Teile | Stearylalkohol mit 6 Mol EO |
| 7 Teile | Rizinusöl mit 30 Mol EO |
| 7 Teile | Ölsäureamid mit 4 Mol EO |
| 14 Teile | Wasser und |
| 3 Teile | Entschäumer wurden bei 40-50°C verrührt. Nach dem Abkühlen erhielt man eine klare, homogene, honiggelbe Mischung, die zum Färben von Polyester im HT-Verfahren geeignet ist. |

### Beispiel 25

| | |
|---|---|
| 48 Teile | N-Alkylphthalimide |
| 28 Teile | Dispergiermittel nach Beispiel 5 (50 %ige Lösung) |
| 14 Teile | Rizinusöl mit 30 Mol EO |
| 7 Teile | Ölsäureamid mit 7 Mol EO und |
| 3 Teile | Entschäumer wurden bei Raumtemperatur bis 40°C verrührt. Die homogene honiggelbe Mischung eignete sich zum Färben von Polyester im HT-Verfahren und zeigte sehr gute Emulgier- und Dispergier-Eigenschaften. |

### Beispiel 26

| | |
|---|---|
| 40 Teile | N-Alkylphthalimide |
| 35 Teile | Dispergiermittel (als 50 %ige Lösung) nach Beispiel 5 |
| 7 Teile | Ölsäureamid mit 7 Mol EO |
| 7 Teile | Rizinusöl mit 30 Mol EO |
| 7 Teile | Oleylalkohol mit 6 Mol EO |
| 1 Teil | Oleylalkohol mit 20 Mol EO |
| 3 Teile | Entschäumer wurden bei Raumtemperatur bis 40°C verrührt. Man erhielt eine klare, homogene honiggelbe Mischung, die sehr gute Emulgier- und Dispergier-Eigenschaften beim Färben von Polyester im HT-Verfahren zeigte. |

### Beispiel 27

| | |
|---|---|
| 50 Teile | eines N-Alkylphthalimid-Gemisches und |
| 15 Teile | Dispergiermittel (getrocknetes Pulver) nach Beispiel 1 wurden mit |
| 17 Teile | Rizinusöl mit 30 Mol EO |
| 3 Teile | Alkylbenzolsulfonsäure-Monoethanolaminsalz und |
| 15 Teile | H₂O zu einer klaren, homogenen, honiggelben Mischung verrührt, die sehr gute Egalisier- und Dispergier-Eigenschaften beim Färben von Polyester im HT-Verfahren zeigte. |

### Beispiel 28

| | |
|---|---|
| 15 Teile | Dispergiermittel (als getrocknetes Pulver) nach Beispiel 1 |
| 15 Teile | H₂O |
| 7,5 Teile | Ölsäure mit 6 Mol EO |
| 10 Teile | Rizinusöl mit 30 Mol EO |
| 2,5 Teile | Monoethanolamin-Salz der Alkylbenzolsulfonsäure und |
| 50 Teile | N-Alkylphthalimid-Gemisch wurden bei Raumtemperatur verrührt. Man erhielt eine klare, homogene Mischung, die beim Färben von Polyester (HT-Verfahren) sehr gute Egalisier- und Dispergier-Eigenschaften zeigte. |

### Beispiel 29

| | |
|---|---|
| 48 Teile | N-Alkylphthalimide (Gemisch) |
| 30 Teile | Dispergiermittel (als 50 %ige Lösung) nach Beispiel 1 |
| 9,5 Teile | Rizinusöl mit 30 Mol EO |
| 7 Teile | Ölsäure mit 6 Mol EO |
| 2,5 Teile | MEA-Salz der Alkylbenzolsulfonsäure und |
| 5 Teile | Entschäumer-Gemisch wurden bei Raumtemperatur bis 40°C verrührt. Man erhielt eine klare, homogene Mischung, die zum Färben von Polyester (HT-Verfahren) mit sehr guter Egalisier- und Dispergierwirkung geeignet war. |

### Beispiel 30

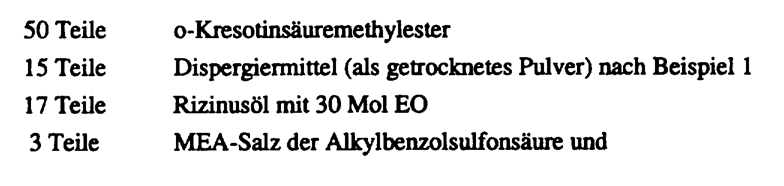

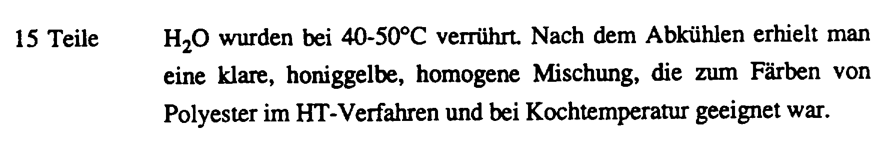

### Beispiel 31

| | |
|---|---|
| 27 Teile | n-Butylphthalimid |
| 18 Teile | Dibenzylether |
| 36 Teile | Dispergiermittel nach Beispiel 1 |
| 7 Teile | Ölsäure mit 6 Mol EO |
| 9,5 Teile | Rizinusöl mit 30 Mol EO |
| 2,5 Teile | MEA-Salz der Alkylbenzolsulfonsäure und |
| 5 Teile | Entschäumer-Gemisch wurden bei Raumtemperatur bis 40°C verrührt. Die klare, homogene, honiggelbe Mischung eignete sich zum Fähren von Polyester im HT-Verfahren. |

### Beispiel 32

| | |
|---|---|
| 48 Teile | N-Alkylphthalimide |
| 28 Teile | Dispergiermittel nach Beispiel 1 (als 50%ige Lösung) |
| 7 Teile | Stearylalkohol mit 6 Mol EO |
| 7 Teile | Rizinusöl mit 30 Mol EO |
| 7 Teile | Ölsäureamid mit 4 Mol EO und |
| 3 Teile | Entschäumer wurden bei Raumtemperatur bis 40°C verrührt. Die klare, homogene, honiggelbe Mischung zeigte beim Färben von Polyester im HT-Verfahren sehr gute Egalisier- und Dispergier-Eigenschaften. |

## Patentansprüche

1. Kondensationsprodukte aus Ketonen der Formel (I) 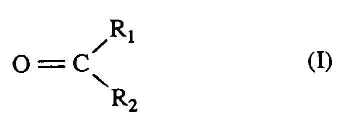 in welcher
R₁ und R₂ gleich oder verschieden sind und jeweils für einen gegebenenfalls substituierten aliphatischen Rest stehen, der durch Heteroatome und -gruppierungen wie -O- oder -NH- unterbrochen sein kann,
oder
R₁ und R₂ gemeinsam mit dem Kohlenstoffatom, an welches sie gebunden sind, für einen gegebenenfalls substituierten cycloaliphatischen Rest oder einen gegebenenfalls substituierten gesättigten Carbocyclus stehen,
Ketonen der Formel (II) 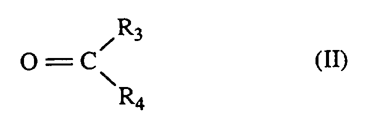 in welcher
R₃ für einen gegebenenfalls substituierten, aliphatischen Rest, der durch Heteroatome und -gruppierungen wie -O- oder -NH- unterbrochen sein kann, steht und
R₄ für einen gegebenenfalls substituierten, aromatischen Rest steht,
Formaldehyd und einem Salz der schwefligen Säure.

2. Kondensationsprodukte gemäß Anspruch 1 aus Mischungen der Ketone (I) und (II) im Molverhältnis 0,5-0,6:0,5-0,4 und, bezogen auf 1 Mol dieser Ketonmischung, 2-2,5 Mol Formaldehyd sowie 0,3-0,6 Mol an Salz der schwefligen Säure.

3. Kondensationsprodukte gemäß Anspruch 1 aus Mischungen der Ketone (I) und (II) im Molverhältnis 0,5-0,6:0,5-0,4 und, bezogen auf 1 Mol dieser Ketonmischung, 2-2,2 Mol Formaldehyd sowie 0,4-0,5 Mol an Salz der schwefligen Säure.

4. Kondensationsprodukte gemäß den Ansprüchen 1 bis 3, dadurch gekennzeichnet, daß als Keton (I) Aceton und als Keton (II) Acetophenon verwendet wird.

5. Verfahren zur Herstellung der Kondensationsprodukte der Ansprüche 1 bis 4, dadurch gekennzeichnet, daß Ketone der Formel (I) und Ketone der Formel (II) mit Formaldehyd und einem Salz der schwefligen Säure bei einem pH-Wert von 9 bis 11 und bei Temperaturen zwischen 100°C und 130°C umgesetzt werden.

6. Verfahren zur Herstellung von Kondensationsprodukten gemäß Anspruch 5, dadurch gekennzeichnet, daß Formaldehyd in 30 bis 40 %iger Lösung oder in Form von Formaldehyd abgebenden Verbindungen eingesetzt wird.

7. Verfahren zur Herstellung von Kondensationsprodukten gemäß Anspruch 5, dadurch gekennzeichnet, daß als Salze der schwefligen Säure Alkalibisulfite oder Ammoniumbisulfite verwendet werden.

8. Verwendung der Kondensationsprodukte gemäß den Ansprüchen 1 bis 4 als Dispergiermittel.

9. Färbereihilfsmittel, enthaltend ein Kondensationsprodukt gemäß Anspruch 1 bis 4 und ein nichtionisches Egalisiermittel.

10. Färbereihilfsmittel, enthaltend ein Kondensationsprodukt gemäß Anspruch 1 bis 4, ein nichtionisches Egalisiermittel und einen Carrierwirkstoff.

11. Verfahren zum Färben und/oder Egalisieren von Wolle, Polyamid und Polyester, dadurch gekennzeichnet, daß man ein Färbereihilfsmittel gemäß Anspruch 9 und 10 verwendet.

## Claims

1. Condensation products of ketones of the formula (I) 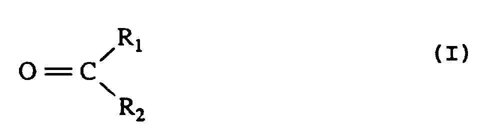 in which
R₁ and R₂ are identical or different and each represents a substituted or unsubstituted aliphatic radical which may be interrupted by heteroatoms and hetero groupings, such as -O- or -NH-,
or
R₁ and R₂ together with the carbon atom to which they are bound represent a substituted or unsubstituted cycloaliphatic radical or a substituted or unsubstituted saturated carbocycle,
and ketones of the formula (II) 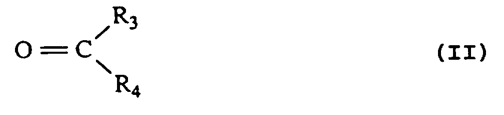 in which
R₃ represents a substituted or unsubstituted aliphatic radical which can be interrupted by heteroatoms and hetero groupings, such as -O- or -NH-, and
R₄ represents a substituted or unsubstituted aromatic radical,
with formaldehyde and a salt of sulphurous acid.

2. Condensation products according to Claim 1 of mixtures of ketones (I) and (II) in a molar ratio of 0.5-0.6:0.5-0.4 with, based on 1 mol of this ketone mixture, 2-2.5 mol of formaldehyde and 0.3-0.6 mol of a salt of sulphurous acid.

3. Condensation products according to Claim 1 of mixtures of ketones (I) and (II) in a molar ratio of 0.5-0.6:0.5-0.4 with, based on 1 mol of this ketone mixture, 2-2.2 mol of formaldehyde and 0.4-0.5 mol of a salt of sulphurous acid.

4. Condensation products according to Claims 1 to 3, characterised in that acetone is used as ketone (I) and acetophenone as ketone (II).

5. Process for the preparation of the condensation products of Claims 1 to 4, characterised in that ketones of the formula (I) and ketones of the formula (II) are reacted with formaldehyde and a salt of sulphurous acid at a pH of 9 to 11 and at temperatures between 100°C and 130°C.

6. Process for the preparation of condensation products according to Claim 5, characterised in that formaldehyde is in 30 to 40% strength solution or in the form of formaldehyde-releasing compounds.

7. Process for the preparation of condensation products according to Claim 5, characterised in that alkali metal bisulphites or ammonium bisulphites are used as the salts of sulphurous acid.

8. Use of the condensation products according to Claims 1 to 4 as a dispersant.

9. Dyeing assistant comprising a condensation product according to Claim 1 to 4 and a nonionic levelling agent.

10. Dyeing assistant comprising a condensation product according to Claim 1 to 4, a nonionic levelling agent and a carrier.

11. Process for the dyeing and/or levelling of wool, polyamide and polyester, characterised in that a dyeing assistant according to Claim 9 and 10 is used.

## Revendications

1. Produits de condensation de cétones de formule (I): 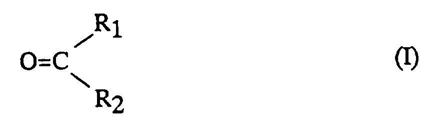 dans laquelle
R₁ et R₂, ayant des significations identiques ou différentes, représentent chacun un radical aliphatique éventuellement substitué et qui peut être interrompu par des hétéroatomes et des groupements hétérogènes tels que -O- ou -NH-,
ou bien
R₁ et R₂ forment ensemble et avec l'atome de carbone auquel ils sont reliés un radical cycloaliphatique éventuellement substitué ou un carbocycle saturé éventuellement substitué,
de cétones de formule (II): 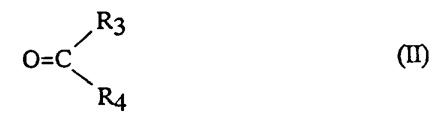 dans laquelle
R₃ représente un radical aliphatique éventuellement substitué et qui peut être interrompu par des hétéroatomes et des groupements hétérogènes tels que -O- ou -NH-, et
R₄ représente un radical aromatique éventuellement substitué,
du formaldéhyde et d'un sel de l'acide sulfureux.

2. Produits de condensation selon la revendication 1, de mélanges des cétones (I) et (II) à un rapport molaire de 0,5 à 0,6:0,5 à 0,4, et, pour 1 mol de ce mélange de cétones, 2 à 2,5 mol de formaldéhyde et 0,3 à 0,6 mol du sel de l'acide sulfureux.

3. Produits de condensation selon la revendication 1, de mélanges des cétones (I) et (II) à un rapport molaire de 0,5 à 0,6:0,5 à 0,4, et, pour 1 mol de ce mélange de cétones, 2 à 2,2 mol de formaldéhyde et 0,4 à 0,5 mol de sel de l'acide sulfureux.

4. Produits de condensation selon les revendications 1 à 3, caractérisés en ce que l'on utilise en tant que cétone (I) l'acétone et en tant que cétone (II) l'acétophénone.

5. Procédé de préparation des produits de condensation des revendications à 4, caractérisé en ce que l'on fait réagir les cétones de formule (I) et les cétones de formule (II) avec le formaldéhyde et un sel de l'acide sulfureux à un pH de 9 à 11 et à des températures de 100 à 130°C.

6. Procédé de préparation des produits de condensation selon la revendication 5, caractérisé en ce que le formaldéhyde est mis en oeuvre à l'état de solution à une concentration de 30 à 40 % ou à l'état de composés libérant du formaldéhyde.

7. Procédé de préparation des produits de condensation selon la revendication 5, caractérisé en ce que l'on utilise en tant que sels de l'acide sulfureux des bisulfites alcalins ou des bisulfites d'ammonium.

8. Utilisation des produits de condensation selon les revendications 1 à 4 en tant qu'agents dispersants.

9. Produits auxiliaires de teinture contenant un produit de condensation selon les revendications 1 à 4, et un agent d'unisson non ionique.

10. Produits auxiliaires de teinture contenant un produit de condensation selon les revendications 1 à 4, un agent d'unisson non ionique et un véhiculeur.

11. Procédé pour teindre et/ou unir la laine, les polyamides et les polyesters, caractérisé en ce que l'on utilise un produit auxiliaire de teinture selon les revendications 9 et 10.
